(19) Europäisches Patentamt
European Patent Office
Office européen des brevets

(11) **EP 1 911 216 B1**

(12) **EUROPÄISCHE PATENTSCHRIFT**

(45) Veröffentlichungstag und Bekanntmachung des Hinweises auf die Patenterteilung:
**01.09.2010 Patentblatt 2010/35**

(21) Anmeldenummer: **06764219.9**

(22) Anmeldetag: **19.07.2006**

(51) Int Cl.:
***H04L 12/56*** (2006.01)

(86) Internationale Anmeldenummer:
**PCT/EP2006/064418**

(87) Internationale Veröffentlichungsnummer:
**WO 2007/014856 (08.02.2007 Gazette 2007/06)**

(54) **VERFAHREN ZUM PHASENBEZOGENEN SCHEDULING DES DATENFLUSSES IN GESCHALTETEN NETZWERKEN**

METHOD FOR THE PHASE-RELATED SCHEDULING OF DATA FLOW IN SWITCHED NETWORKS

PROCEDE D'ORDONNANCEMENT DU FLUX DE DONNEES DANS DES RESEAUX COMMUTES, LIE A DES PHASES

(84) Benannte Vertragsstaaten:
**DE FR GB IT**

(30) Priorität: **01.08.2005 DE 102005036064**

(43) Veröffentlichungstag der Anmeldung:
**16.04.2008 Patentblatt 2008/16**

(73) Patentinhaber: **SIEMENS AKTIENGESELLSCHAFT**
**80333 München (DE)**

(72) Erfinder: **LAUTHER, Ulrich**
**80686 München (DE)**

(56) Entgegenhaltungen:
**EP-A- 1 185 044      WO-A-02/100023**
**WO-A-03/039082      US-A1- 2001 002 195**

**Beschreibung**

Die Erfindung liegt auf dem technischen Gebiet der Kommunikationsnetze und betrifft insbesondere ein Verfahren zur Kommunikation eines Realzeit-Datenverkehrs in einem durch vorherige Planung kollisionsvermeidenden Kommunikationsnetz, z.B. dem Realzeit-Ethernet-Protokoll, bei dem deterministisch, d. h. vorhersagbar, ein Realzeit-Datenverkehr über ein konventionelles Ethernet-Netzwerk erfolgt. Des Weiteren erstreckt sich die Erfindung auf ein Speichermedium für Datenverarbeitungsvorrichtungen mit darauf gespeicherten Befehlen zur Durchführung eines solchen Verfahrens, sowie auf ein Kommunikationsnetzwerk, in dem ein solches Verfahren abläuft.

In modernen Kommunikationsnetzen, wie sie beispielsweise in der Automatisierungstechnik eingesetzt werden, ist es notwendig, dass Nachrichten zwischen Teilen (Schaltelementen) des Kommunikationsnetzes, wie etwa Steuerung, Antriebe, Sensoren und dergleichen, schnell ausgetauscht werden. Kollisionsfrei und damit realzeitfähig kann dieser Austausch insbesondere dann erfolgen, wenn der Pfad einer jeden Nachricht durch das die Systemteile des Kommunikationssystems verbindende Netzwerk und die Sendezeitpunkte der Nachrichten vorab festgelegt werden. In diesem Fall ist die Ankunftszeit der Nachricht bei jedem Schaltelement a priori bekannt und das Schaltelement kann die Nachricht entsprechend dem geplanten Pfad weiterleiten, ohne dass Adressen interpretiert oder Konflikte aufgelöst werden müssten.

Wesentlich für eine solche Vorgehensweise ist ein Planungswerkzeug, welches Pfade der Nachrichten durch das Kommunikationsnetz automatisch festlegt ("Routing") und insbesondere optimiert. Optimierungsziel ist hierbei, die Abarbeitungszeit für die Gesamtzeit der Nachrichten zu minimieren.

Ein wie oben beschriebenes Verfahren in einem kollisionserkennungsbasierten Netzwerk ist in der PCT-Anmeldung WO 03/039082 A1 offenbart. Nachteilig bei dem dort gezeigten Verfahren ist jedoch, dass jede Nachricht genau einmal pro Abarbeitungszyklus verschickt wird, was zu einer suboptimalen Nutzung der verfügbaren Bandbreite führt.

Demgegenüber besteht die Aufgabe der vorliegenden Erfindung darin, ein Verfahren zur Kommunikation eines Realzeit-Datenverkehrs in einem kollisionsvermeidenden Kommunikationsnetz anzugeben, durch welches eine bessere Nutzung der verfügbaren Bandbreite erreicht werden kann.

Diese Aufgabe wird nach dem Vorschlag der Erfindung durch ein Verfahren mit den Merkmalen des Anspruchs 1 gelöst. Vorteilhafte Ausgestaltungen der Erfindung sind durch die Merkmale der Unteransprüche angegeben.

Erfindungsgemäß ist ein Verfahren zur Kommunikation eines Realzeit-Datenverkehrs in einem kollisionsvermeidenden Kommunikationsnetz gezeigt, bei dem zeitlich vor einem zyklisch wiederkehrenden Realzeit-Datenverkehr (beispielsweise schon während der Projektierungsphase des Kommunikationsnetzes) die im Weiteren genannten Schritte durchgeführt werden. Der zyklisch wiederkehrende Realzeit-Datenverkehr findet hierbei innerhalb eines Makrozyklus statt, welcher sich aus sukzessiven Zyklen, in denen jeweils eine oder mehrere Realzeit-Nachrichten des Realzeit-Datenverkehrs versendet und/oder empfangen werden, zusammensetzt. In dem erfindungsgemäßen Verfahren wird zunächst ein Routing des zyklisch wiederkehrenden Realzeit-Datenverkehrs zur Ermittlung von Datenpfaden für die Realzeit-Nachrichten in dem Kommunikationsnetz durchgeführt. Hierbei können insbesondere kostengünstigste Datenpfade ermittelt werden. Danach wird eine Zeitplanung ("Scheduling") des zyklisch wiederkehrenden Realzeit-Datenverkehrs auf Basis der ermittelten Datenpfade durchgeführt, um hierdurch Sendezeitpunkte für die Realzeit-Nachrichten innerhalb der Zyklen festzulegen. Weiterhin wird der Makrozyklus in k Phasen unterteilt, wobei k eine natürliche Zahl > 1, und jeder der Realzeit-Nachrichten des Realzeit-Datenverkehrs wird eine Phase zugeordnet. Durch die Zuweisung einer jeweiligen Realzeit-Nachricht zu einer Phase wird festgelegt, dass eine Realzeit-Nachricht, welche der k-ten Phase zugeordnet ist, ausschließlich in dem k-ten Zyklus versendet und/oder empfangen wird. Hierdurch kann erreicht werden, dass bestimmte (bzw. bestimmbare) Nachrichten nur in jedem k-ten Zyklus verschickt und/oder empfangen werden, so dass in vorteilhafter Weise Bandbreite eingespart werden kann. Gleichermaßen kann jede der k Phasen als ein Makrozyklus angesehen werden, der wiederum in Unterphasen aufgeteilt werden kann.

Bei einer besonders vorteilhaften Ausgestaltung des erfindungsgemäßen Verfahrens wird das Scheduling des zyklisch wiederkehrenden Realzeit-Datenverkehrs und das Zuweisen einer jeweiligen Realzeit-Nachricht zu einer Phase gleichzeitig, d. h. in einem Schritt durchgeführt, wodurch ein Optimierungspotenzial in Bezug auf eine zeitliche Belegung des Makrozyklus mit Realzeit-Nachrichten ausgeschöpft werden kann.

Die Erfindung wird nachfolgend anhand von in den Zeichnungen dargestellten Ausführungsbeispielen erläutert. Es zeigen

Fig. 1    einen Phasenbaum bezüglich der Zeitspanne eines einzelnen Zyklus,

Fig. 2    ein Problem-/Lösungsmuster und einen Datenfluss,

Fig. 3    einen Schalter und zwei damit verbundene Leitungen,

Fig. 4    ein Graphenmodell für die Flussberechnung,

Fig. 5      ein kleines leeres Netzwerk mit Knoten s und t,

Fig. 6      den kürzesten Weg, welcher die Knoten s und t verbindet,

Fig. 7      das Routing eines die Kante b in der "falschen" Richtung querenden Pfads,

Fig. 8      das resultierende Flussmuster,

Fig. 9      ein Knotenmodell für die Flussberechnung,

Fig. 10      eine Topologie eines kleinen Beispiels,

Fig. 11      ein Routing des kleinen Beispiels,

Fig. 12      die Aufteilung einer Nachricht 0 in zwei Äste,

Fig. 13      das Scheduling des kleinen Beispiels,

Fig. 14      die Scheduling-Nachrichten,

Fig. 15      ein reales Beispiel,

Fig. 16      ein Netzwerk nach dem Routing,

Fig. 17      das Routing einer einzelnen Nachricht,

Fig. 18      das Routing mit zwei zusätzlichen Strecken.

In einem Realzeit-Ethernet, das für eine schnelle Kommunikation zwischen Komponenten (z.B. Sensoren, Antriebe, Kontroller) eines Systems eingesetzt wird, werden planbare Nachrichten in einer zyklischen Weise ausgetauscht. Für diese Nachrichten können sowohl die Pfade, welche sie vom Sender zu dem (den) Empfänger(n) nehmen, und der Zeitpunkt innerhalb des Zyklus, wann sie durch die durch den Pfad vorgegebenen Schalter hindurch treten, in einer Initialisierungsphase so bestimmt werden, dass keine Konflikte zwischen Nachrichten auftreten. In dieser Weise ist eine Kommunikation frei von jeglichem Nicht-Determinismus und ein Realzeit-Verhalten wird möglich.

Zu diesem Zweck wird der Kommunikationszyklus aufgeteilt in einen Realzeit-Teil (RT), welcher die geplanten Nachrichten übermittelt werden, und einen Nicht-Realzeit-Teil (NRT), in dem eine nicht geplante Nachrichtenübermittlung unter Verwendung von herkömmlichen TCP/UDP/IP-Methoden stattfinden kann.

Für die regulären Nachrichten gibt es ein Routing- und ein Scheduling-Problem: eine Planung sollte in der Weise erfolgen, dass der RT-Teil einen möglichst kleinen Teil des Gesamtzyklus belegt, so dass genug Platz für die nicht geplanten Nachrichtenübermittlungen bereitsteht.

Das nun im Weiteren betrachtete Netzwerk besteht aus Schaltern und bidirektionalen Verbindungen. Es gibt bis zu vier Anschlüsse an einem Schalter, die jeweils einen Eingang und einen Ausgang enthalten, was einen Voll-Duplex-Betrieb ermöglicht: wenn zwei Schalter A und B unter Verwendung von beispielsweise den Anschlüssen A,2 und B,1 miteinander verbunden sind, liegt ein Paar von Verbindungen vor, das zwischen dem Ausgang von Anschluss A,2 und dem Eingang von Anschluss B,1, und zwischen dem Eingang von Anschluss A,2 und dem Ausgang von B, 1 verläuft.

Es treten Verzögerungen auf den Verbindungen auf, die proportional zur Länge der Verbindung sind. Weiterhin wird eine festgelegte Verzögerung für den Durchtritt einer Nachricht durch einen Schalter angenommen. Zwischen zwei Nachrichten, die durch den gleichen Anschluss eines Schalters hindurch laufen, ist eine zeitliche Lücke erforderlich, wobei die Länge der Lücke von dem Schaltertyp abhängen kann. Typischerweise ist die Topologie des Netzwerks recht einfach. Schalter und Verbindungen formen Ring- oder Baumstrukturen. Jedoch ist die Topologie des erfindungsgemäßen Verfahrens nicht auf diese einfachen Topologien eingeschränkt.

Bei vorgegebenen Netzwerkelementen mit einer bestimmten (bestimmbaren) Topologie sind für jede Nachricht ein Pfad durch das Netzwerk und die Zeitpunkte, zu welchen die Nachricht durch die Schalter passieren soll, zu bestimmen. Die Gesamtzeit zum Senden aller Nachrichten sollte hierbei minimiert werden. In der Routing-Phase werden ein oder mehrere Pfade für jede Nachricht bestimmt. Während des Scheduling werden die Zeitpunkte, zu welchen jede Nachricht entlang ihres Pfads durch den Schalter passiert, zugewiesen.

Zusätzlich zu dieser Zeitplanungsinformation muss in dem erfindungsgemäßen Verfahren jede Nachricht einer Phase zugewiesen werden. Um Bandbreite einzusparen, wird eine Nachricht hierbei nicht in jedem Zyklus gesendet, sondern nur in jedem k-ten Zyklus, d.h. der Zyklus wird in k Phasen unterteilt, wobei k eine natürliche Zahl größer 1 ist, und die Nachricht wird einer dieser Phasen zugeordnet. Die Zahl k wird hierbei als Reduktion bezeichnet. Die k Phasen können wiederum in Unterphasen unterteilt werden. Die Reduktion wird durch den Nutzer für jede Nachricht spezifiziert, jedoch muss die Phase durch den Zeitplaner zugewiesen werden (wenn sie nicht durch den Nutzer vorher schon zugewiesen worden ist).

Im Weiteren werden Bedingungen für die resultierenden Routing- und Scheduling-Aufgaben dargestellt. Im Grunde sind das Routing und das Scheduling keine voneinander unabhängigen Aufgaben, da Entscheidungen, die in der Routing-Phase getroffen wurden, die Qualität des Scheduling beeinflussen. Jedoch wird aus praktischen Gründen das Problem in die beiden Aufgaben Routing und Scheduling unterteilt. Ein Weg, um Wechselwirkungen zwischen diesen Aufgaben zu berücksichtigen, ist die weiter unten diskutierte Lastverteilung.

### 1. Das Routingproblem

Eingangsinformation für das Routing ist die Netzwerkbeschreibung und eine Liste von Nachrichten. Für jede Nachricht kennt man den sendenden Schalter und die Menge der empfangenden Schalter. Die Aufgabe liegt nun darin, die Menge der Schalter und Anschlüsse zu finden, durch welche die Nachricht passieren muss, um an ihren Zielen anzukommen.

Wenn eine Nachricht k Ziele hat, kann sie von dem Sender gleichzeitig zu allen ihren Empfängern gesendet werden, wobei sie an zwischenliegenden Schaltern einem sich verzweigenden Pfad folgen kann. Alternativ kann sie in unabhängiger Weise von dem Sender zu k verschiedenen Zeitpunkten an die k Empfänger gesendet werden. Weiterhin kann eine Variante zwischen diesen beiden Extremen verwendet werden.

In der obig genannten PCT-Anmeldung WO 03/039082 ist dargelegt, dass die Wahl zwischen diesen Optionen nichttrivial ist und in dem Scheduling-Schritt erfolgen kann.

Als ein Ergebnis des Routings kennt man für jede Nachricht die Verbindungen und Schalter, durch welche sie passieren muss, sowie die Ankunftszeit an den Schaltern. Die Ankunftszeiten können in einfacher Weise durch Aufsummieren der Verzögerungen an den Verbindungen und Schaltern, durch welche die Nachricht passiert, berechnet werden.

### 2. Das Scheduling-Problem

Die Aufgabe des Scheduling ist es, Zeiten (in Bezug auf den Beginn eines Zyklus) zum Senden von Nachrichten in solcher Weise zuzuordnen, dass keine Konflikte zwischen Nachrichten auftreten, wobei die Gesamtzeit zum Übertragen aller Nachrichten (Übertragungsdauer) minimalisiert ist.

Aufgrund der oben formulierten Bedingungen legt die Sendezeit automatisch die Ankunftszeit an allen von der Nachricht benutzten Schaltern bzw. deren Anschlüssen fest. (So lange keine Wartezeiten an den Schaltern vorkommen.)

Mögliche Konflikte zwischen Nachrichten treten in Schalteranschlüssen von Schaltern auf, da ein Anschluss zu einem Zeitpunkt nur eine Nachricht bedienen kann.

### 2.1 Scheduling-Restriktionen

Betrachtet sei ein Anschlussausgang p und zwei Nachrichten m und n, welche diesen Anschluss nutzen: Die beiden Nachrichten werden durch ihre jeweilige Sender zu den Zeiten $t_m$ bzw. $t_n$ gesendet und sind an den betrachteten Anschlüssen zu den Zeitpunkten

$$t_{m,p} = t_m + \delta(m,p) \qquad (3.1)$$

und

$$t_{n,p} = t_n + \delta(n, p) \qquad (3.2)$$

verfügbar. Hier ist $\delta(m,p)$ die Summe der Verzögerungen zwischen dem Sender von m und dem Anschlussausgang p, wie sie während des Routings berechnet worden ist. Die Länge dieser beiden Nachrichten ist $l_m$ bzw. $l_n$.

Zwischen zwei Nachrichten, die einen Anschluss passieren, ist eine zeitliche Lücke der Größe **Gap** erforderlich.

Es müssen zwei Fälle unterschieden werden:

Die Nachricht m nutzt den Anschluss p vor der Nachricht n:

Dann muss

$$t_{n,p} \geq t_{m,p} + l_m + gap \qquad (3.3)$$

oder

$$t_n + \delta(n,p) \geq t_m + \delta(m,p) + l_m + gap \qquad (3.4)$$

oder

$$t_n \geq t_m + \delta(m,p) - \delta(n,p) + l_m + gap \qquad (3.5)$$

gelten.

Die Nachricht m nutzt den Anschluss p nach der Nachricht n:

Dann muss

$$t_m \geq t_n + \delta(n,p) - \delta(m,p) + l_n + gap \qquad (3.5)$$

oder

$$t_n \leq t_m + \delta(n,p) + \delta(m,p) + l_n + gap \qquad (3.7)$$

gelten.

Somit muss für jedes Paar von Nachrichten m und n, welche den gleichen Anschluss p passieren, entweder

$$t_n \geq t_m + \delta(m,p) - \delta(n,p) + l_m + gap \qquad (3.8)$$

oder

$$t_n \leq t_m + \delta(m,p) - \delta(n,p) - l_n - gap \qquad (3.9)$$

gelten.

Ein gültiges Schema muss Sendezeiten $t_m$ allen Nachrichten m so zuordnen, dass die beiden letztgenannten Ungleichungen für alle Paare von Nachrichten, die sich einen gemeinsamen Ausgangsanschluss teilen, gelten.

Es sei nun ein Anschlusseingang betrachtet. Grundsätzlich gelten die gleichen Überlegungen, welche zu einem zweiten Paar von Ungleichungen führen. Wenn jedoch zwei Nachrichten $m_i$ und $m_j$ den gleichen Anschlusseingang passieren, müssen sie auch einen gemeinsamen Anschlussausgang unter Verwendung einer einzigen Verbindung passiert haben. Deshalb nehmen die Werte $\delta_{i,p}$ und $\delta_{j,p}$ in den obigen Ungleichungen um den gleichen Betrag zu, nämlich die Verzögerung dieser Verbindung, was zu identischen Ungleichungen führt. Als eine Folge müssen Ressourcenkonflikte an den Anschlusseingängen nicht berücksichtigt werden; sie werden automatisch gelöst, wenn Konflikte an den Anschlussabgängen durch ein korrektes Scheduling gelöst werden.

2.2 Makrozyklen

Um Bandbreite zu sparen, wird eine Nachricht nicht in jedem Zyklus gesendet, sondern nur in jedem k-ten Zyklus, d.h. der Zyklus wird in k Phasen unterteilt und die Nachricht wird einer dieser Phasen zugeordnet. Dies führt anstelle einer linearen Zeitskala zu dem Konzept eines Phasenbaums, in dem die Nachrichten eingebettet sind. Es sei hier bemerkt, dass die Verzweigung in dem Baum bei einer gegebenen Ebene (Level) für alle Knoten gleich ist, d.h.

$$\frac{Reduktion_{i+1}}{Reduktion_i} = n_i, \text{ wobei } n_i \text{ eine ganze Zahl} > 1 \text{ ist.}$$

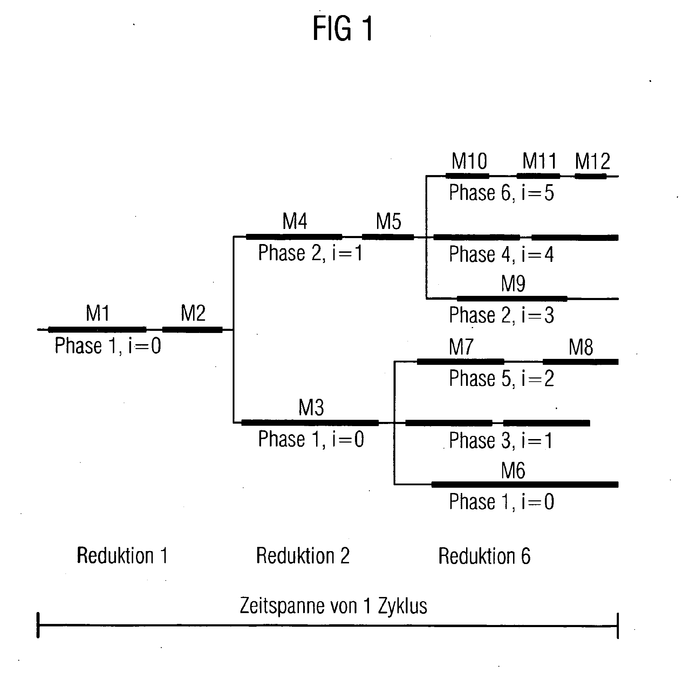

Die Fig. 1 zeigt ein Beispiel eines Phasenbaums und ein Nummerierungsschema für die Phasen. Für jede Nachricht ist die Reduktion in den Eingangsdaten spezifiziert. Die Phasennummer wird entweder dem Zeitplaner zugeführt oder durch ihn bestimmt. Die oben dargelegten Zeitbedingungen zwischen den Nachrichten müssen zwischen Nachrichten, die den gleichen Zweig des Phasenbaums belegen und zwischen Nachrichten in einem Zweig und dessen Unterzweigen beachtet werden.

Die Aufgabe des Scheduling ist es nun, jeder Nachricht $m_i$ eine Sendezeit $t_i$ so zuzuordnen, dass die beiden obigen Ungleichungen 3.8 und 3.9 erfüllt sind, wobei die Gesamtzeit zum Übertragen aller Nachrichten minimiert ist. Gleichzeitig muss jeder Nachricht eine Phase zugeordnet werden.

Dem Beispiel von Fig. 1 kann demnach folgendes entnommen werden: In einem ersten Zyklus werden die Nachrichten m1, m2, m3 und m6, jeweils mit einer Pause dazwischen, gesendet. In einem zweiten Zyklus werden die Nachrichten m1, m2, m4, m5 und m9, jeweils mit einer Pause dazwischen, gesendet. In einem fünften Zyklus werden die Nachrichten m1, m2, m3, m7 und m8, jeweils mit einer Pause dazwischen, gesendet. In einem fünften Zyklus werden die Nachrichten m1, m2, m3, m7 und m8, jeweils mit einer Pause dazwischen, gesendet. In einem sechsten Zyklus werden die Nachrichten m1, m2, m4, m5, m10, m11 und m12, jeweils mit einer Pause dazwischen, gesendet. Z.B. werden also diese Nachrichten nur in jedem sechsten Zyklus gesendet.

3. Algorithmen und ihre Implementierung

3.1 Softwarearchitektur

Die Software wird in fünf Module zerlegt: xml_reader, router, scheduler, xml_writer und graphical user interface (GUI).

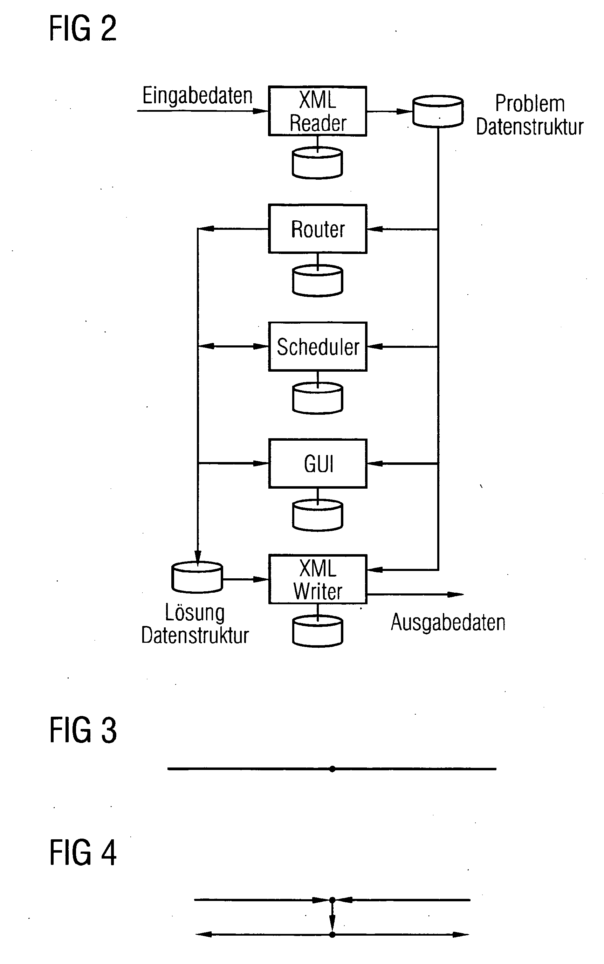

Fig. 2 zeigt den Datenfluss zwischen diesen Modulen.

Um diese Komponenten so weit als möglich zu entkoppeln, wird das Problem-/Lösungsmuster für das Design von Datenstrukturen verwendet. Es gibt eine (kleinstmögliche) Problemdatenstruktur (Problem.h), welche erzeugt und durch den xml_reader mit den Problemdaten gefüllt wird. Für alle anderen Module ist diese Datenstruktur eine Nur-Lese-Datenstruktur.

Der Router und der Scheduler berechnen die Lösung und speichern ihre (möglicherweise) (Zwischen-)Ergebnisse in einer Lösungsdatenstruktur (Lösung.h). Diese Datenstruktur wird schließlich von dem xml_writer gelesen, um eine Ausgabedatei (xml-Format) zu erzeugen.

Alle Module definieren und verwenden zusätzliche private Datenstrukturen, die oftmals Erweiterungen der "offiziellen" Klassen in Problem und Lösung darstellen, jedoch unabhängig davon modifiziert sein können. Es gibt gewöhnlicherweise einen Zeiger (m_orig) in "privaten" Klassen, welche sie mit der "offiziellen" Version verknüpfen. Dieses Konzept ermöglicht eine größtenteils unabhängige Entwicklung und Wartung der Module xml_reader, router, scheduler, GUI und xml_writer. Für diese Flexibilität wird ein geringer Mehraufwand in Bezug auf Speicherplatz und Zeit zum Einrichten der privaten Datenstrukturen bezahlt.

Die folgende Tabelle zeigt die Größe der Komponenten

| Modul | Linien | LoC |
|---|---|---|
| Problem | 576 | 467 |
| Solution | 431 | 232 |

(fortgesetzt)

| Modul | Linien | LoC |
|---|---|---|
| xml reader | 964 | 636 |
| Router | 1486 | 1021 |
| scheduler | 2867 | 1995 |
| GUI | 681 | 548 |
| xml writer | 1054 | 777 |
| Main | 59 | 44 |

3.2 Zentrale Datenstrukturen

Bevor Algorithmen diskutiert werden, werden zentrale Datenstrukturen eingeführt. Unten werden die Namen von in der Implementierung verwendeten Klassen aufgelistet und ihre Rolle und Interaktion dargelegt.

Es sei bemerkt, dass die hier beschriebenen Klassen in der wirklichen Implementierung auf zwei oder mehr Klassen abgebildet werden können. Aus Gründen der Einfachheit werden hier Entitäten als eine Klasse beschrieben.

**MsgPort** beschreibt eine durch einen Anschluss hindurch tretende Nachricht. Enthält die relative Ankunftszeit der Nachricht an dem Anschluss, d.h. die Ankunftszeit, wenn die Nachricht zur Zeit 0 von ihrem Sender verschickt wurde, einen Zeiger auf die Nachricht, einen Zeiger zu ihrem Vorgänger im Pfad, und einem Zeiger zum Anschluss. Nach dem Scheduling enthält sie auch die tatsächliche Zeit, wann eine Nachricht durch den Anschluss passiert.

**Port** beschreibt einen Anschluss. Zeigt zu dem Schalter, zu dem er gehört, und zu der angeschlossenen Verbindung. Enthält auch eine Liste von MsgPorts, die Zugriff zu allen Nachrichten liefern, welche diesen Anschluss benutzen. Die letztgenannte Information ist ein Ergebnis der Routing-Phase.

**Switch** beschreibt einen Schalter. Enthält den Namen des Schalters und eine Liste seiner Anschlüsse.

**Link** beschreibt eine Verbindung. Enthält die Länge (Verzögerung) der Verbindung und zeigt auf die beiden Anschlüsse, die durch diese Verbindung verbunden sind.

**Message** beschreibt eine Nachricht. Enthält die Nachricht-ID, ihre Länge, eine Liste von sendenden Schaltern, eine Liste von empfangenden Schaltern, eine Liste von MsgPorts, die Zugriff zu allen von der Nachricht passierten Anschlüssen liefert, sowie die Zeit und Phase, zu der die Nachricht geplant ist. Die Liste von MsgPorts ist das Ergebnis der Routing-Phase und Phase und Zeit jenes der Scheduling-Phase.

**PhaseTreeNode** beschreibt einen Knoten des Phasenbaums. Enthält einen Zeiger zu dem Vorgänger im Baum, die Knotenebene im Baum und seine Nummer und Index in seiner Ebene.

**MsgPhase** beschreibt eine Nachricht, die in einer bestimmten Phase geplant werden kann. Enthält einen Zeiger zu einem Knoten des Phasenbaums und die Zeit, zu der die Nachricht geplant werden kann, wenn die zugehörige Phase verwendet wird.

**Component** beschreibt eine Zusammenhangskomponente des als Datenstruktur nicht explizit vorhandenen Restriktionsgraphen. Enthält Listen von allen Nachrichten und Anschlüssen, die zu der Komponente gehören.

3.2.1 Der Routing-Graph

Für das Routing muss das Netzwerk durch einen Graphen modelliert werden. Es gibt verschiedene Wege dies zu tun. Der detaillierteste Weg wäre, Knoten einzuführen, die Anschlusseingänge und Anschlussausgänge modellieren und gerichtete Kanten einzuführen, die Verbindungen modellieren. Jede Verbindung bildet sich hierbei in ein Paar von antiparallel gerichteten Kanten ab, die den Anschlusseingang/-ausgang von einem Schalter mit dem Anschlussausgang/-eingang eines anderen Schalters verbinden. Zusätzliche gerichtete Kanten sind erforderlich, um die Konnektivität innerhalb eines Schalters zu modellieren, was zu 16 zusätzlichen Kanten für jeden Schalter mit 4 Anschlüssen führt.

Eine solche genaue Modellierung ist jedoch nicht wirklich erforderlich, da die Verzögerung zwischen jedem Paar von Anschlüssen eines Schalters gleich ist und die Verzögerung auf einer Verbindung für beide Richtungen gleich ist. Es reicht aus, den Schalter als Knoten und die Verbindung als Kante eines Routing-Graphen zu verwenden. Da alle Verbindungen bidirektional sind, kann man den ungerichteten Graphen aus der TURBO C++ Klassenbibliothek verwenden. Da die Verbindungen zu den Anschlüssen zeigen, kann man während des Routings leicht die Informationen einsammeln, durch welche Anschlüsse eine Nachricht hindurch tritt.

### 3.2.2 Der Restriktionsgraph und seine Komponenten

Die Scheduling-Bedingungen, die weiter oben dargestellt sind, können auch durch einen nicht-gerichteten Graphen modelliert werden. Knoten dieses Graphen sind Nachrichten, Kanten sind Bedingungen, die erfüllt werden müssen, wenn Zeiten den beiden Nachrichten zugeordnet werden. Jedoch gibt es keine Notwendigkeit, diesen Graphen explizit zu speichern; die wesentliche Information ist in den MsgPorts enthalten. Gewöhnlicherweise ist dieser Graph nicht zusammenhängend, sondern zerfällt in Zusammenhangskomponenten. Aus Gründen der Effizienz werden diese Komponenten zuerst identifiziert und das Schedulingproblem komponentenweise behandelt.

### 3.3 Verarbeitungsschritte und Algorithmen

### 3.3.1 Eingabeverarbeitung

Die Eingabeinformation wird in einem xml-file angegeben. Das xml-file wird geparsed und durch einen speziellen xml-parser interpretiert, welcher Gebrauch von dem TURBO Tokenizer und Hash-Code basierten Wörterbüchern macht. Der Parser überprüft nicht nur syntaktische Fehler, sondern auch semantische Inkonsistenzen. Unter Verwendung der TURBO-Bibliothek ist es möglich, den Parser in nur ca. 600 Codezeilen zu implementieren; er verarbeitet ca. 4 MByte/ Sekunde auf einem 1 GHz Pentium III-Rechner .

Als ein Ergebnis hat man die gefüllte Problemdatenstruktur: Schaltertypen, Schalter, Anschlüsse, Verbindungen, Nachrichten, Quellen (Sender) und Ziele (Empfänger).

### 3.3.2 Routing

### 3.3.2.1 Routing ohne Redundanz

Wenn nur ein Pfad zwischen einem Quelle/Ziel-Paar einer Nachricht gefordert ist, kann man den wohlbekannten Dijkstra-Algorithmus verwenden.

Wenn eine Nachricht mehr als einen Empfänger hat, wird ein Baum kürzester Pfade oder ein Steiner-Baum unter Verwendung einer Dijkstra-basierten Heuristik gebildet.

### 3.3.2.2 Routing mit Redundanz

Ein ausgefeilter Ansatz ist nötig, wenn zwei oder mehrere Ressourcen-disjunkte Pfade erforderlich sind, um eine Fehlfunktionstoleranz zu liefern. Ein naiver Ansatz wäre es, zuerst einen Pfad zu routen, dann die von dem Pfad benutzen Kanten zu blockieren, und schließlich den zweiten Pfad zu routen. Jedoch kann diese Heuristik leicht versagen, wie weiter unten diskutiert ist. Ein besserer Ansatz ist es, das Problem auf ein Minimalkostenflussproblem wie folgt abzubilden: Das Netzwerk wird als ein gerichteter Graph modelliert, d.h. jede Verbindung wird durch ein Paar von antiparallelen Kanten dargestellt. Schalter sind durch Paare von Knoten dargestellt, einer für eintretende, der andere für austretende Kanten. Die zwei Knoten sind durch eine zusätzliche Kante verbunden, welche den durch den Knoten passierenden Verkehr trägt. Die Fig. 3 und 4 zeigen die Transformation eines nicht gerichteten Netzwerks in ein gerichtetes Flussmodell. Fig. 3 zeigt hierbei insbesondere einen Schalter und zwei daran angeschlossene Verbindungen. Fig. 4 zeigt ein Graphenmodell für die Berechnung. Die Kapazität aller Kanten wird auf Eins gesetzt. Wenn man nun einen Fluss mit Wert Zwei und minimalen Kosten von der Quelle zum Ziel durch dieses Netzwerk drückt, kann man sicher sein, dass die Bedingung Ressourcen-Disjunktheit sowohl für die Verbindungen als auch für die Schalter erfüllt ist.

Es sind eine Vielzahl von Standardalgorithmen verfügbar, um dieses Flussproblem zu lösen (siehe R. K. Ahuja, T. L. Magnanti, J. B. Orlin: "Network Flows", Prentice Hall, 1993). Die für diese Anwendung am besten geeignete Methode ist der "sukzessiv kürzester erweiternder Pfad"-Algorithmus. Die grundlegende Idee ist es, eine Sequenz von kürzesten Pfaden zwischen Quelle und Ziel zu berechnen. Jedoch werden diese Pfade auf einem "Rest"-Netzwerk berechnet. In dem ersten Schritt ist dieses Netzwerk identisch zu dem Original-(transformierten) Netzwerk, wobei man sich entlang gerichteter Kanten (die keinen Fluss tragen) bewegt. Wenn ein Pfad gefunden worden ist, wird ein zugehöriger Fluss in den betrachteten Kanten aufgenommen und kein weiterer Fluss kann entlang dieser Kanten stattfinden, da ihre Einheitskapazität erschöpft ist. (Soweit gleicht dies der einfachen pfadweisen Heuristik.) Jedoch kann man sich entlang einer erschöpften Kante in der "falschen" Richtung bewegen, wobei Fluss (und Kosten) entfernt und somit frühere Entscheidungen revidiert werden.

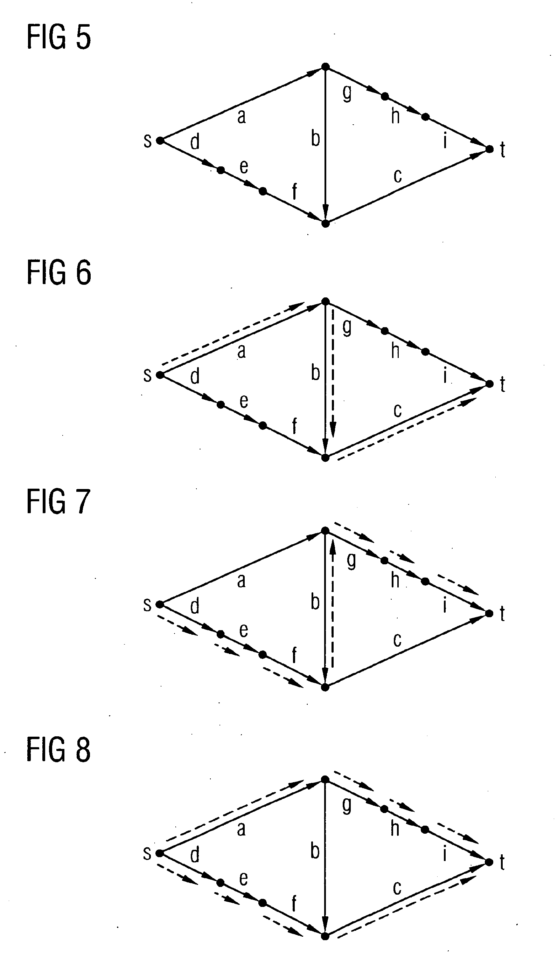

Es wird nun Bezug auf die Fig. 5 bis 8 genommen, um diese Idee hervorzuheben. In Fig. 5 sieht man ein kleines leeres Netzwerk mit Knoten s und t, die durch zwei Knoten- und Kanten-disjunkte Pfade verbunden sind. Fig. 6 zeigt den ersten (kürzesten) Pfad, welcher s und t verbindet.

Nun kann für einen konventionellen kürzesten Pfadalgorithmus kein weiterer Pfad gefunden werden, da die Kanten a, b und c gesättigt sind. Jedoch kann man in dem Rest-Netzwerk einen Pfad (d, e, f, b, g, h, i), der die Kante b passiert, in der "falschen" Richtung routen und seinen Fluss aufheben.

Fig. 8 zeigt das resultierende Flussmuster. Man kann nun jeden Pfadsuchalgorithmus verwenden, um diesen Fluss in (s, t)-Pfade zu zerlegen, was die Endlösung des Problems liefert.

Die Kosten einer Kante in dem Rest-Netzwerk, das rückwärts durchlaufen wird, sind negativ (Kosten werden weggenommen). Deshalb kann der Dijkstra-Algorithmus zum Auffinden eines kürzesten Pfads (welcher sich auf nicht-negative Kantenkosten stützt) nur nach einer Transformation der Kosten auf "reduzierte" Kosten verwendet werden, was eine Nicht-Negativität für alle Kantenkosten garantiert.

Hinweis zur Implementierung: es ist nicht wirklich notwendig, die Datenstrukturen gemäß der Transformation in den Fig. 3 und 4 explizit aufzubauen. Man kann den Fluss in der Vorwärtsrichtung einer Originalkante als positiv und jenen in der gegensätzlichen Richtung als negativ codieren. In der Knotendatenstruktur benötigt man ein zusätzliches Feld, welches den Fluss durch den Knoten verfolgt, und für den Dijkstra-Algorithmus benötigt man zwei Distanzkennungen pro Knoten.

Der Pseudo-Code für eine redundante Pfadkalkulation ist wie folgt:

```
route_redundant (int redundancy) {
    initialize flow to zero in all nodes and edges;
    for redundancy paths {
        find shortest path through residual network,
            using Dijkstra's algorithm;
        update flow along the path found;
        update node distance to reflect reduced costs;
    }
    decompose flow into paths using any path searching


        algorithm, moving along edges with flow only;
    }
```

Weiterer Hinweis zur Implementierung: eine Initialisierung von Datenstrukturen sollte nicht erfolgen, bevor ein Pfad geroutet ist (was ein Durchlaufen des gesamten Netzwerks beinhalten würde), sondern nach dem Routing, und nur für jene Teile des Netzwerks, die während der Dijkstra-Expansion erreicht worden sind.

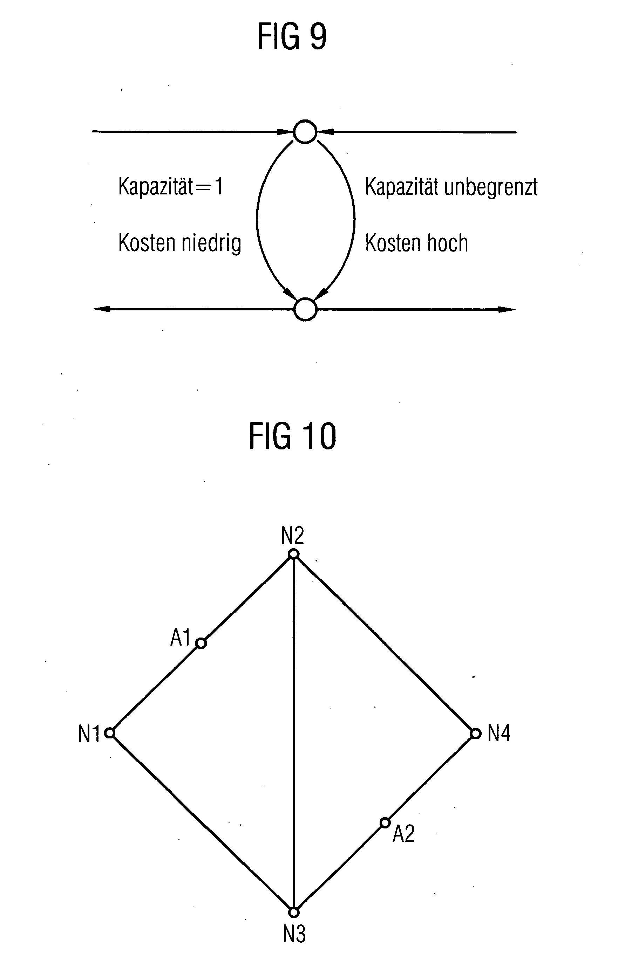

Für Einzelheiten des Konzepts des Rest-Netzwerks und reduzierter Kosten sowie für eine allgemeine Einführung in Netzwerkflüsse, siehe z.B. R. K. Ahuja, T. L. Magnanti, J. B. Orlin: "Network Flows", Prentice Hall, 1993. Ein vollständig Ressourcen-disjunktes Routing kann nicht immer möglich sein (aufgrund von Engstellen in der Netzwerktopologie). Gleichwohl wird hier auf ein Routing abgezielt, welches "soweit als möglich Ressouren-disjunkt" ist. Zu diesem Zweck wird die knoteninterne Kante in Fig. 4 durch zwei parallele Kanten ersetzt (Fig. 9); eine mit Kapazität 1 und niedrigen Kosten, die andere mit unbegrenzter Kapazität und hohen Kosten. Auf diese Weise ist in einer Minimalkostenflusslösung eine mehrfache Verwendung eines Knotens möglich, wird jedoch, wenn möglich, vermieden.

Die Erhöhung der Laufzeit, die man für das flussbasierte Routing in Kauf nehmen muss, ist nicht hoch. Der Basis-Algorithmus ist jenem der sequentiellen Version sehr ähnlich. Man muss jedoch mit einer ein wenig komplizierteren Datenstruktur fertig werden und man muss mehrere Kanten während des Routings beachten (Kanten, welche rückwärts überquert werden könnten). Deshalb ist die Laufzeit grob geschätzt zweimal jener des sequentiellen Routings.

3.3.2.3 Lastverteilung

Wenn es alternative Pfade zwischen Sender und Empfänger einer Nachricht gibt, wird versucht, den Verkehr unter diesen Alternativen aufzuteilen. Dies wird erreicht, indem eine Kostenfunktion zum Überqueren einer Kante verwendet wird, die die Verkehrslast auf der Verbindung berücksichtigt. Wenn Verbindungen eine begrenzte Kapazität **capacity** hätten, könnte die folgende Formel für die Kosten einer Kante mit Länge **length** und Verkehr **traffic** verwendet werden:

$$\cos t = \frac{length}{1 - \dfrac{traffic}{capacity}}$$

Wenn sich der Verkehr auf einer Kante deren Kapazität annähert, wird die Kante teurer und wird in zukünftigen Pfaden vermieden. Es gibt zwei Probleme mit diesem Ansatz: Erstens, früh geroutete Nachrichten sehen keinen Verkehr und nehmen immer den kürzesten Pfad, wohingegen spät geroutete Nachrichten auch Umleitungen nehmen. Zweitens, man hat keine fixierte Kapazität für Verbindungen, weshalb das Routing in zwei Durchgängen durchgeführt wird.
Im ersten Durchgang werden die Nachrichten geroutet, ohne den Verkehr zu berücksichtigen, d.h. entlang kürzester Pfade, basierend auf der Verzögerung an Kanten und Knoten. Dann wird für jede Verbindung der effektive Verkehr bestimmt, welcher im Prinzip der Summe von Nachrichtenlängen plus Lücken zwischen Nachrichten entspricht; da jedoch Nachrichten in der Scheduling-Phase in verschiedenen Phasen verteilt sein können, wird die Länge einer Nachricht durch die Anzahl von in ihrem Reduktionslevel zugelassenen Phasen geteilt.
In dem zweiten Durchgang wird der maximale effektive Verkehr einer Verbindung als Kapazität für alle Verbindungen genutzt und Nachrichten werden von ihren Verbindungen entfernt und unter Verwendung einer verkehrsabhängigen Kostenfunktion umgeroutet, wie oben gezeigt ist.
Abhängig von Befehlsoptionen kann man entweder alle Nachrichten entfernen/umrouten, oder nur jene, die durch die am meisten benutzte Verbindung hindurchgehen. Ebenso kann die Anzahl von Umroute-Durchgängen kontrolliert werden.

3.3.2.4 Gemeinsame Kantennutzung

Wenn eine Nachricht mehr als einen, etwa n, Empfänger hat, kann man entweder einen kürzesten Pfadbaum erzeugen, der alle Empfänger abdeckt (die Pfade nutzen Kanten gemeinsam), oder n separate kürzeste Pfade erzeugen. Wenn mit Redundanz geroutet wird, muss das gemeinsame Nutzen von Kanten davon verschieden gehandhabt werden. Für jeden Empfänger erzeugt man r Pfade, wenn r der Redundanzfaktor ist, d.h., insgesamt rn Pfade. Dann wird versucht, diese Pfade in Bäume zu rekombinieren. Das folgende Stück Pseudo-Code zeigt das Verfahren:

```
make_trees(List paths, List trees) {

    while (paths not empty) {

        delete path p from list paths;

        start a new emtpy tree t and append to list trees;
        add path p to t;

        do {
            from all remaining paths of list paths find path best,
            that matches best to tree t;
            if (matching path found) {
                delete best from list paths and
                add it to tree t;
            }
        } while (exist matching path);
    }
}
```

In der obigen Prozedur ist ein Pfad "passend" (matching), wenn er dem Baum hinzugefügt werden kann, ohne Baumeigenschaften zu zerstören, d.h. ohne eine Schleife zu formen, wobei eine Anpassung als um so besser angesehen wird, je mehr Elemente sie mit dem gewachsenen Baum gemeinsam hat.

3.3.2.5 Routing-Ergebnisse

Das wesentliche Ergebnis des Routings sind die MsgPort-Objekte, die eine durch einen Anschluss hindurchgehende Nachricht beschreiben, d.h. sie nehmen die betreffende Nachricht, den durchlaufenen Anschluss und die akkumulierte Verzögerung zwischen dem Anschluss und dem Ende der Nachricht auf. Für den weiter unten diskutierten Kompaktierungsschritt muss man für jeden MsgPort seinen Vorläufer im Pfad speichern.
Nun hat man einen leichten Zugriff auf alle Nachrichten, die einen gegebenen Anschluss durchlaufen und auf alle von einer gegebenen Nachricht durchlaufenen Anschlüsse.

3.3.3 Finden von verbundenen Komponenten

Alle unten diskutierten Scheduling-Algorithmen haben wenigstens eine Komplexität der Größenordnung $O(n^2)$ zum Scheduling von n Nachrichten. Deshalb kann Verarbeitungszeit gewonnen werden, wenn das Scheduling-Problem in kleinere Unterprobleme aufgeteilt wird, die unabhängig voneinander gelöst werden können. Zwei Teilmengen von Nachrichten MI und MJ können unabhängig voneinander geschedult werden, wenn es keine direkte oder indirekte Bedingung zwischen einer Nachricht $m_i \in$ MI und eine Nachricht $m_j \in$ MJ gibt. Was den Restriktionsgraphen angeht, bedeutet diese Bedingung: es gibt keinen Pfad zwischen $m_i$ und $m_j$, oder äquivalent hierzu, $m_i$ und $m_j$ gehören zu verschiedenen verbundenen Komponenten des Graphen.
Verbundene Komponenten können in der Zeit $O(m+n)$ in einem Graphen mit n Knoten und m Kanten durch eine einfache Breiten- oder Tiefensuche auf dem Graphen gefunden werden. In diesem Fall kann dies ohne eine explizite Graphendarstellung erfolgen: man durchläuft den (konzeptuellen) Graphen, indem man von einer Nachricht zu allen ihren Anschlüssen und von einem Anschluss zu allen Nachrichten geht. Die MsgPort-Listen in Messages und Ports erlauben dies in effizienter Weise zu tun. Während dieses Prozesses wird eine neue Komponente erzeugt, wann immer die Suche die derzeitige Komponenten ausgeschöpft hat und noch nicht besuchte Nachrichten immer noch vorliegen. Wenn Nachrichten und Anschlüsse während der Suche durchlaufen werden, werden sie in komponentenspezifische Listen von Nachrichten und Anschlüssen eingefügt. Alle weiter unten diskutierten Algorithmen arbeiten komponentenweise.

Hier ist ein Stück eines Pseudo-Codes angegeben, der beschreibt, wie Komponenten geformt werden:

```
find_components() {
    for all messages msg, s.t. msg belongs not yet to any
    component {
        create new component c;
        insert msg into an empty queue q;
        while (q not empty) {
          pop msg from q;
          add mag to component c;
          collect all ports traversed by m;
          for all ports p collected {
            for all messages m using port p {
              append m to q, if not yet in q;
            }
          }
        }
    } // all msg
  }
```

Somit bewegt man sich in einer Breitensuche von der Nachricht über MsgPort zur Nachricht und beginnt eine neue Komponente, wenn die aktuelle Komponente nicht weiter ausgedehnt werden kann.

In der echten Implementierung werden die Nachrichten nicht nur an Komponenten verteilt, sondern auch an Ebenen des Phasenbaums. Jede Komponente enthält eine Menge von Nachrichtenlisten, eine Liste pro Ebene, so dass das Scheduling ebenenweise erfolgen kann.

### 3.3.4 Initiales Scheduling

In der phasenfreien Vorgängerlösung wurde eine einfache Heuristik für das Scheduling eingesetzt: Nachrichten werden ausgewählt, indem ein Prioritätsschema verwendet und zu der frühest möglichen Zeit geschedult wird. Nachdem eine Nachricht geschedult worden ist, wird die frühest mögliche Zeit für noch nicht geschedulte Nachrichten und Auswahlprioritäten aktualisiert. Dies kann implementiert werden, indem eine Prioritätswarteschlange für nicht geschedulte Nachrichten und der Restriktionsgraph zum Aktualisieren der frühest möglichen Zeiten verwendet werden.

```
queue_schedule() {

    forall messages m
        lowest_feasible_time(m) = 0;
        insert m into priority queue;
    }

    while (queue not empty) {
        select message m to schedule from priority queue;
        delete message m from priority queue;
        schedule m at lowest feasible time;
        for all affected messages h {
            update lowest feasible time of h;
            update priority queue;
        }
    }

}
```

Die Priorität einer Nachricht basiert auf ihrer frühest möglichen Zeit. Andere Kriterien können hinzugefügt werden. Wenn eine Nachricht m geschedult worden ist, müssen die frühest möglichen Zeiten anderer Nachrichten erhöht werden; diese Nachrichten werden leicht gefunden, indem die von dieser Nachricht verwendeten Anschlüsse und die diese Anschlüsse verwendenden Nachrichten betrachtet werden.

Um den Ablauf zu beschleunigen, werden MsgPorts von den Listen in den Ports entfernt, sobald eine Nachricht geschedult worden ist. (Es ist nicht länger notwendig, frühest mögliche Zeiten zu berechnen.)

Wird das Scheduling in das Phasenkonzept einbezogen, muss nicht nur die Zeit bestimmt werden, wann eine Nachricht gesendet werden soll, sondern auch ihre Phase. Dies wird in einem einzigen Schritt getan. Zu diesem Zweck wird in jeder Nachricht ein Array von Zeigern zu MsgPhase-Objekten vorgehalten. Diese Objekte verfolgen die kürzest mögliche Zeit für eine Nachricht, wenn diese in einer spezifischen Phase geschedult ist. Um eine Nachricht und ihre Phase zu schedulen, wird nun eine Prioritätswarteschlange von MsgPhase-Objekten, nicht von Nachrichten, verwendet.

Somit sieht der neue Algorithmus wie folgt aus:

```
initial_schedule (int level) {

    for all messages of level {
       for all feasibe phases {
          create MsgPhase object, noting message, phase,
          and lowest feasible time;
          insert the MsgPhase into the priority queue and
          let the message point to it;
       }
    }
    while (priority queue not empty) {
```

```
extract MsgPhase object with highest priority
assign phase p and time t according to the MsgPhase
object to the respective message m;
for all other MsgPhase objects message m points to {
   delete it from the priority queue;
}

remove MsgPorts of m from their port lists;

find messages affected by scheduling of m;
(these are still unscheduled messages sharing a port with
m)

for all affected messages a {
   updated the lowest feasible time for scheduling
      message a in phase p;
   if (this time has changed) {
      identify the MsgPhase object that belongs to
         message a and phase p;
      update lowest feasible time and position in
         the priority queue;
   }
}
}
} // initial_schedule
```

Die gezeigte Prozedur wird für jede Ebene des Phasenbaums durchlaufen. Zur Berechnung der frühest möglichen Zeit einer Nachricht m in der Phase p muss zusätzlich der oberste MsgPort für jede Phase und Anschluss beobachtet werden.

3.3.5 Iterative Scheduling-Verbesserung

Das anfängliche Schema kann oftmals verbessert werden, wenn Nachrichten iterativ entfernt und neu geschedult werden.

3.3.6 Kompaktion

Bislang ist angenommen worden, dass eine Nachricht m alle ihre Anschlüsse p zur frühest möglichen Zeit passiert, d.h. zur Zeit $t_{m,p} = t_m + \delta(m,p)$, wenn die Nachricht zur Zeit $t_m$ geschedult wurde. Da jedoch ein Schalter eine Nachricht für eine begrenzte Zeit speichern kann, kann man diese Bedingung aufweichen und Flexibilität erzielen, indem den MsgPorts (die Objekte, die eine durch einen Schalter passierende Nachricht beschreiben) unabhängige Zeiten zugeordnet werden. Die folgenden Ungleichungen müssen immer noch gelten:

1. Eine Nachricht kann nicht von einem Anschluss gesendet werden, bevor sie an dem Anschluss angekommen ist:

$$t_{m,p} > t_{m,pred} + \delta(m,p) - \delta(m, pred)$$

Hier ist **pred,** der in dem Pfad der Nachricht vorausgehende MsgPort.
2. Man benötigt eine Lücke zwischen zwei Nachrichten, welche den gleichen Anschluss passieren:

$$t_{m,p} > t_{m_{below},p} + length(m_{below}) + gap$$

Hier ist $m_{below}$ die m in dem Anschluss p vorausgehende Nachricht und **length ($m_{below}$)** ihre Länge.
3. Eine Nachricht kann nur für eine begrenzte Zeit **buffertime** gespeichert werden:

$$t_{m,p} < t_{m,pred} + \delta(m,p) - \delta(m, pred) + buffertime$$

Das System von linearen Ungleichungen könnte durch einen LP-Löser gelöst werden, jedoch tut es ein einfacher iterativer Algorithmus auch. Alle Zeiten werden zuerst auf einen niedrigen Wert initialisiert, dann werden die Zeiten von MsgPorts entweder hochgedrückt, wenn die erste oder zweite Bedingung verletzt ist oder hochgezogen, wenn die dritte Bedingung verletzt ist. Wie üblich in Berechnungen des längsten Pfads wird die einem MsgPort zugewiesene Zeit Potenzial genannt.

```
compaction() {
  for all MsgPorts mp initialize pot(mp);
  stable = false;
  while (not stable) {
    stable = true;
    // push:
    for all MsgPorts mp {
      if (Condition_1 is violated) {
        increase pot(mp); stable = false;
      }
      if (Condition_2 is violated) {
        increase pot(mp); stable = false;
      }
    }
    // pull:
    for all MsgPorts mp {
      if (Condition_3 is violated) {
        increase pot(pred(mp)); stable = false;
      }
    }
  }
}
```

Dieser Algorithmus endet, wenn eine mögliche Lösung gefunden ist; die Existenz einer möglichen Lösung ist offensichtlich: sie ist jene, die erzielt wird, wenn Nachrichten in Schaltern ohne Verzögerung fortgeleitet werden. Der Initialisierungsschritt ist einfach, wenn man es mit dem untersten Wert des Phasenbaums zu tun hat: man initialisiert auf Null. Bei höheren Ebenen des Phasenbaums hängt der anfängliche Wert von dem Anschluss und Phase ab; er wird von dem höchsten MsgPort in jenem Anschluss in der vorherigen nicht-leeren Ebene abgeleitet. Somit muss eine Kompaktion ebenenweise durchgeführt werden.

3.3.7 Aufwärtsverschieben

Der Nutzer kann wollen, dass Nachrichten so spät als möglich geschedult werden. Um dies zu erzielen, wird ein Verfahren, das ähnlich zur Kompaktion ist, verwendet. Es gibt lediglich drei Modifikationen:

1. Der Prozess wird wiederum ebenenweise durchgeführt, geht jedoch abwärts.

2. MsgPorts werden auf höchst mögliche Werte initialisiert.

3. Potenziale werden vermindert, bis alle oben genannten Bedingungen erfüllt sind.

3.3.8 Scheduling bei Vorliegen von fixierten Zeiten

Wenn eine oder mehrere Nachrichten einer fixierten Zeit zugeordnet worden sind, muss man die bislang diskutierten Algorithmen modifizieren.

Während des anfänglichen Schedulings werden diese Nachrichten im Voraus zu ihrer fixierten Zeit und Phase geschedult. Wenn eine freie Nachricht bei einer Zeit t geschedult wird, wird zuerst geprüft, ob diese Zeit einen Konflikt mit einer der fixierten Nachrichten zu der gleichen Phase erzeugt; wenn dem so ist, wird die zulässige Zeit der Nachricht dementsprechend erhöht und sie wird auf der Prioritätswarteschlange für eine spätere Verarbeitung nach hinten geschoben.

Der Scheduling-Verbesserungsschritt wird für Phasen übersprungen, welche fixierte Nachrichten enthalten, da der Scheduling-Verbesserungsalgorithmus auf der freien Bewegbarkeit von Nachrichten in der Zeit basiert. Es könnte deshalb vorteilhaft sein, fixierte Nachrichten in nur einer einzigen Phase zu sammeln.

Kompaktion und Aufwärtsverschieben werden in leichter Weise an fixierte Nachrichten angepasst; sie werden einfach nicht bewegt.

3.4 Gesamte Scheduling-Sequenz

Es wird nun die gesamte Sequenz von Scheduling-Algorithmen gezeigt:

```
schedule() {

    find_components();

    for all components {
      for all levels of the phase tree {
        calculate initial schedule and assign phases;
        for all phases of this level {
          improve schedule by swapping of messages;
          apply the compaction algorithms;
        }
      }
    }

    if (late scheduling requested) {
      find maximum make span (looking at all components);
      for all components {
        for all levels going down {
          for all phases of level {
            apply the shift_up algorithm;
          }
        }
      }
    }

} // schedule
```

## 4. Ergebnisse

Nun werden die diskutierten Algorithmen anhand eines kleinen Beispiels demonstriert, dann werden Ergebnisse für ein reales Beispiel angegeben.

### 4.1 Kleines Beispiel

Es wird nun Bezug auf Fig. 10 genommen, worin eine Topologie des kleinen Beispiels gezeigt ist. Die unten angegebene Tabelle beschreibt die Nachrichten, die geroutet und geschedult werden sollen:

| Nachricht | Sender | Empfänger/Redundanz | | Reduktion | Kantenteilung |
|---|---|---|---|---|---|
| 0 | N1 | N4/2 | N2/2 | 1 | wahr |
| 1 | N1 | N4/2 | N2/2 | 1 | falsch |
| 2 | N1 | N4/1 | N2/1 | 1 | falsch |
| 3 | N1 | N2/1 | N3/1 | 3 | wahr |
| 4 | N1 | N2/1 | N3/1 | 15 | falsch |
| 5 | N1 | N2/1 | N3/1 | 15 | falsch |
| 6 | N1 | N3/1 | | 15 | falsch |

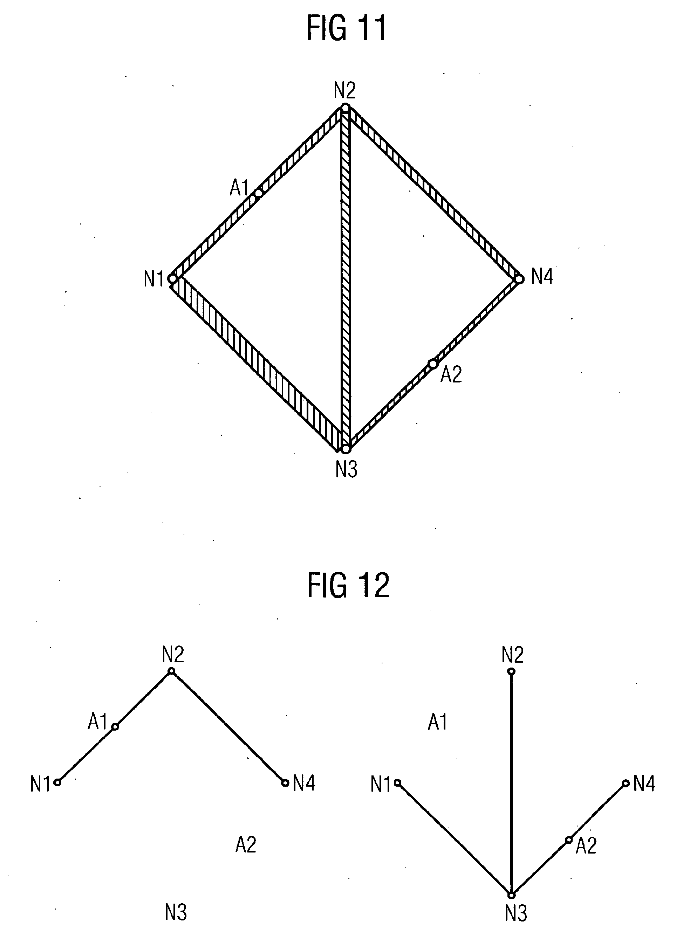

Es wird nun Bezug auf Fig. 11 genommen, worin das Routing des kleinen Beispiels dargestellt ist. Aufgrund der Kantenteilung kann die Nachricht 0 in einem redundanten Weg unter Verwendung von zwei Bäumen geroutet werden (siehe Fig. 12).

Nachricht 1, mit ShareEdges = falsch, benötigt 3 Pfade um die Empfänger in einem redundanten Weg zu verbinden. Das resultierende Routing-Muster ist das gleiche wie jenes von Fig. 12, jedoch wird die Verbindung N1 -> N3 zweimal verwendet.

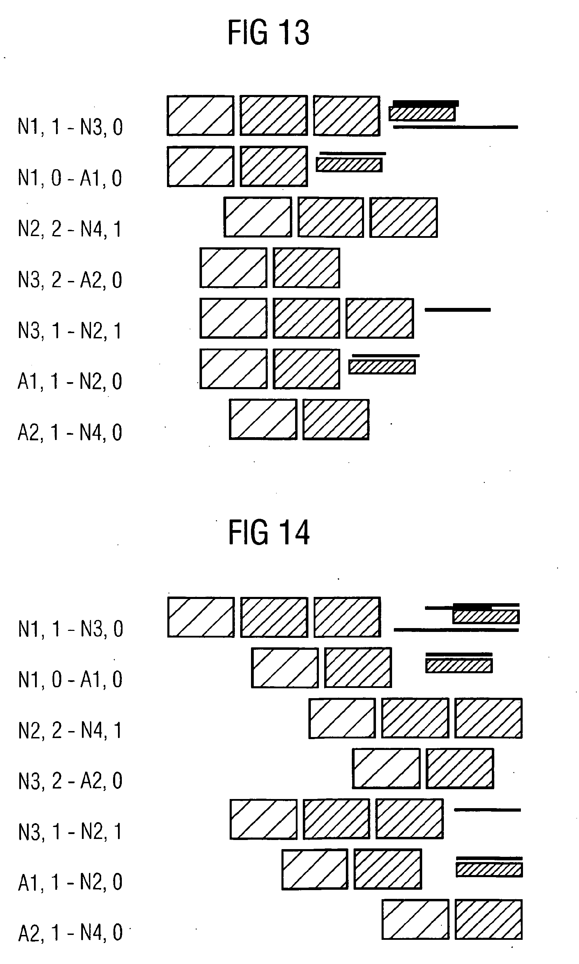

Es wird nun Bezug auf Fig. 13 genommen, worin das resultierende Zeitschema gezeigt ist. Das Zeitschema ist als ein modifiziertes Gantt-Diagramm gezeigt: für jeden Anschluss sind die zugeordneten Nachrichten entsprechend der Zeit, zu der sie den Anschluss belegen, gezeigt (die horizontale Achse des Diagramms stellt die Zeit dar). Für Nachrichten mit einer Reduktion von größer als 1 wird die vertikale Achse gemäß der Anzahl von Phasen pro Anschluss unterteilt; somit spiegelt die Darstellung den Phasenbaum von Fig. 1 wieder. Hingewiesen wird auf die größere Lücke, wo eine Nachricht mit Reduktion 1 und eine weitere mit Reduktion 15 dem Anschluss N1,0 angrenzen. Dies ergibt sich aufgrund des AdditionalReductionGap-Parameters.

Wenn wir zudem den StartAlignedBorder-Parameter auf falsch setzen, werden die Nachrichten innerhalb der gesamten Zeitspanne so weit als möglich aufwärts bewegt (Fig. 14).

### 4.2 Ein reales Beispiel

Die beschriebenen Algorithmen sind getestet worden, indem ein reales Beispiel eines Zugs mit vier Wägen verwendet wurde.

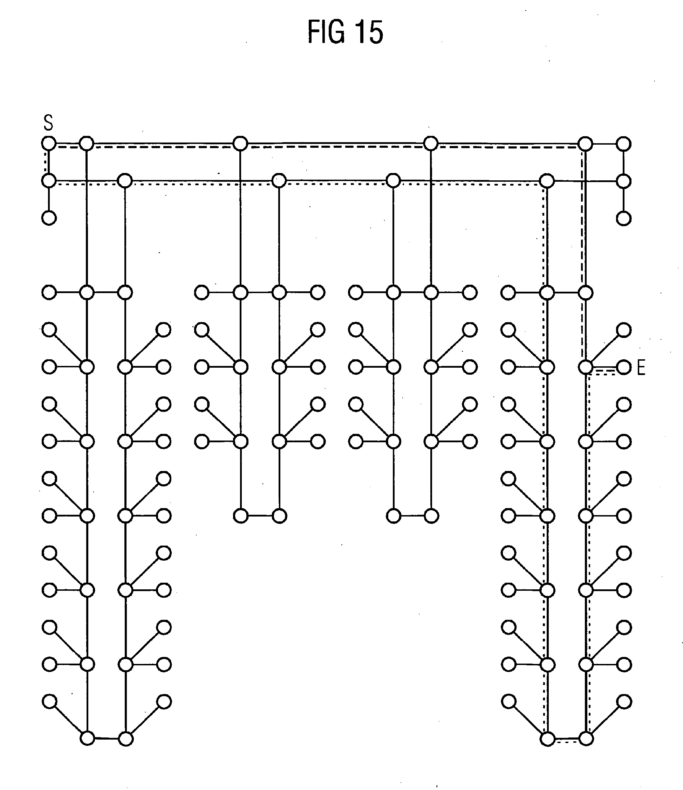

Es wird nun Bezug auf Fig. 15 genommen, worin das zugehörige Netzwerk mit Schaltern und Verbindungen des Zugs mit vier Wägen vor dem Routen gezeigt ist.

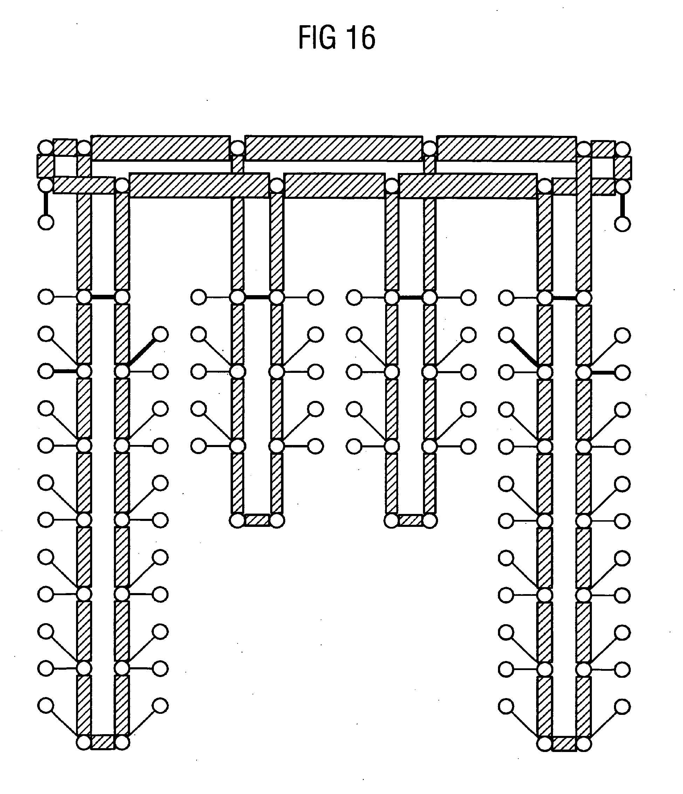

Es wird nun Bezug auf Fig. 16 genommen, wo die Situation nach dem Routing dargestellt ist. Die Breite der Verbindungen gibt den Umfang des durch die Verbindungen fließenden Verkehrs an.

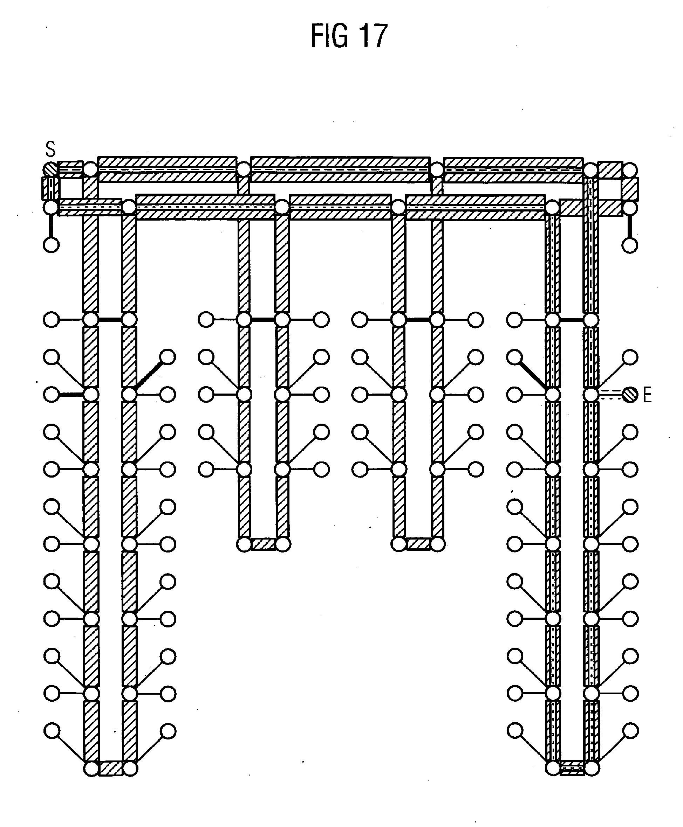

Es wird nun Bezug auf Fig. 17 genommen, worin das Routing einer einzigen Nachricht dargestellt ist. Der Sender ist mit S, der Empfänger mit E gekennzeichnet. Hierbei ist ein Pfad gestrichelt, der andere gepunktet eingezeichnet. Ein Routing von zwei Ressourcen-disjunkten Pfaden war gefordert, jedoch ist es aufgrund der Engstelle nahe des Empfängers nicht vollständig möglich (unmittelbar vor dem Empfänger haben die beiden Pfade einen gemeinsamen Verlauf).

### 4.2.1 Lastverteilung

Um die Wirksamkeit der Lastverteilung zu demonstrieren, wurden zwei zusätzliche Verbindungen zu der Topologie des gezeigten Beispiels hinzugefügt.

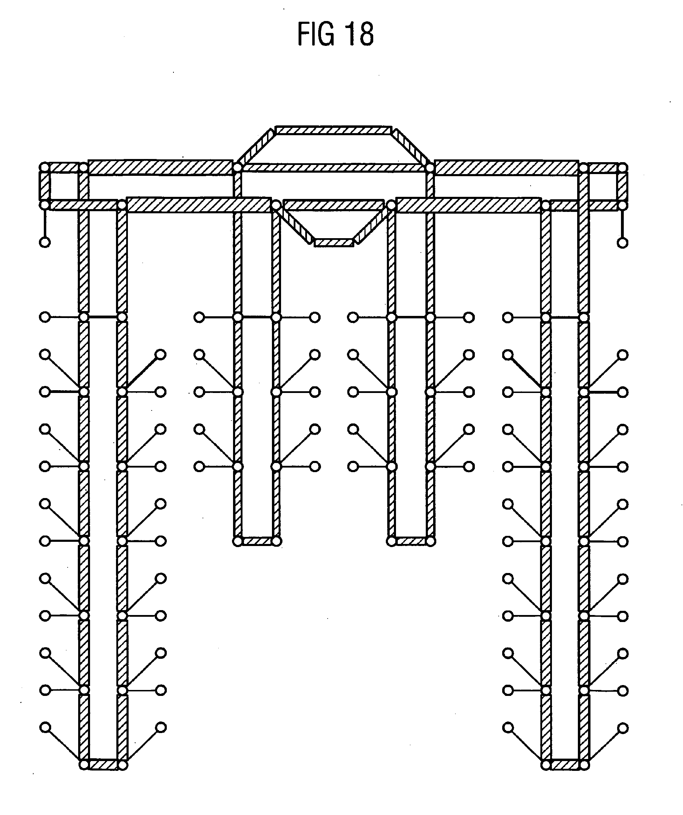

Es wird nun Bezug auf Fig. 18 genommen, worin das Routen mit zwei zusätzlichen Verbindungen dargestellt ist. Fig. 18 zeigt, wie der Verkehr zwischen den nun parallelen Verbindungen in der Hauptschleife verteilt wird, wobei der Umfang des Verkehrs durch die Dicke der Verbindungen dargestellt ist.

### 4.2.2 Gemeinsames Nutzen der Kanten

In dem Beispiel gibt es eine Synchronisationsnachricht, die von einem Hauptcontroller an 61 Empfänger mit Redundanz 2 geschickt wird. Demzufolge werden 122 Pfade durch den flussbasierten Routing-Algorithmus initial erzeugt. Diese werden dann durch den beschriebenen Kantennutzungsmechanismus in zwei Bäume kollabiert. Wenn keine gemeinsame Kantennutzung erlaubt ist, ist die Anzahl der verbleibenden Bäume 24, nicht 122, da viele Pfade einander vollständig überlappen und deshalb beseitigt werden können.

### 4.2.3 Laufzeiten

Die unten angegebene Tabelle fasst die für die verschiedenen Verarbeitungsschritte unter Verwendung eines 1,7 GHz Pentium 4-Rechners benötigten CPU-Zeiten zusammen:

| CPU-time für xml_reader | 0,020 |
|---|---|
| CPU-time für routing | 0,170 |
| CPU-time für scheduling | 0,260 |
| CPU-time für xml_writer | 0,170 |

**Patentansprüche**

1. Verfahren zur Kommunikation eines Realzeit-Datenverkehrs in einem kollisionsvermeidenden Kommunikationsnetz, bei dem zeitlich vor einem zyklisch wiederkehrenden, aus Realzeit-Nachrichten zusammengesetzten Realzeit-Datenverkehr folgende Schritte durchgeführt werden:

   - Routing des zyklisch wiederkehrenden Realzeit-Datenverkehrs zur Ermittlung von kostengünstigsten Datenpfaden für die Realzeit-Nachrichten im Kommunikationsnetz, sofern kostengünstigste Datenpfade existieren,
   - Scheduling des zyklisch wiederkehrenden Realzeit-Datenverkehrs auf Basis der ermittelten Datenpfade zur Festlegung von Sendezeitpunkten für die Realzeit-Nachrichten innerhalb der Zyklen,
   - Unterteilen eines Makrozyklus in k Phasen, wobei k eine natürliche Zahl > 1 ist,
   - Zuweisen einer jeweiligen Realzeit-Nachricht zu einer Phase und
   bei dem das Scheduling des zyklisch wiederkehrenden Realzeit-Datenverkehrs und das Zuweisen einer jeweiligen Realzeit-Nachricht zu einer Phase gleichzeitig erfolgen.

2. Verfahren nach Anspruch 1, bei welchem eine Phase in l Subphasen unterteilt wird, wobei l eine natürliche Zahl > 1 ist.

3. Speichermedium für Datenverarbeitungsvorrichtungen mit darauf gespeicherten Befehlen, die die Datenverarbeitungsvorrichtung zur Durchführung aller Schritte des Verfahrens nach einem der Ansprüche 1 bis 3 veranlassen.

4. Kollisionsvermeidendes Kommunikationsnetzwerk zur Kommunikation eines Realzeit-Datenverkehrs, welche eine Einheit umfasst, die zeitlich vor einem aus Realzeit-Nachrichten zusammengesetzten Realzeit-Datenverkehr folgende Schritte veranlasst:

   - Routing des zyklisch wiederkehrenden Realzeit-Datenverkehrs zur Ermittlung von kostengünstigsten Datenpfaden für die Realzeit-Nachrichten im Kommunikationsnetz, sofern kostengünstigste Datenpfade existieren,
   - Scheduling des zyklisch wiederkehrenden Realzeit-Datenverkehrs auf Basis der ermittelten Datenpfade zur Festlegung von Sendezeitpunkten für die Realzeit-Nachrichten innerhalb der Zyklen,
   - Unterteilen eines Makrozyklus in k Phasen, wobei k eine natürliche Zahl > 1 ist,
   - Zuweisen einer jeweiligen Realzeit-Nachricht zu einer Phase und
   die derart ausgebildet ist, dass das Scheduling des zyklisch wiederkehrenden Realzeit-Datenverkehrs und das Zuweisen einer jeweiligen Realzeit-Nachricht zu einer Phase gleichzeitig erfolgen.

**Claims**

1. Method for communicating a real-time data traffic in a collision-avoiding communication network, wherein the following steps are implemented temporally before a cyclically recurring real-time data traffic made up of real-time messages:

   - routing of the cyclically recurring real-time data traffic to determine optionally economical data paths for the real-time messages in the communication network, provided that economical data paths exist,
   - scheduling of the cyclically recurring real-time data traffic based on the data paths determined to establish send times for the real-time messages within the cycles,
   - subdividing a macrocycle into k phases, where k is a natural number > 1,
   - allocating a respective real-time message to a phase and wherein the scheduling of the cyclically recurring real-time data traffic and the allocation of a respective real-time message to a phase take place simultaneously.

2. Method according to claim 1, wherein a phase is subdivided into 1 sub-phases, where 1 is a natural number > 1.

3. Storage medium for data processing devices with commands stored thereon, which prompt the data processing device to implement all steps of the method according to one of claims 1 to 3.

4. Collision-avoiding communication network for communicating a real-time data traffic, having a unit, which initiates the following steps temporally before a real-time data traffic made up of real-time messages:

   - routing of the cyclically recurring real-time data traffic to determine optionally economical data paths for the real-time messages in the communication network, provided that economical data paths exist,
   - scheduling of the cyclically recurring real-time data traffic based on the data paths determined to establish send times for the real-time messages within the cycles,
   - subdividing a macrocycle into k phases, where k is a natural number > 1,
   - allocating a respective real-time message to a phase and is embodied such that the scheduling of the cyclically recurring real-time data traffic and the allocation of a respective real-time message to a phase take place simultaneously.

**Revendications**

1. Procédé de communication d'un trafic de données temps réel dans un réseau de communication d'évitement de collision, dans lequel, chronologiquement avant un trafic de données temps réel cycliquement récurrent composé de messages temps réel, les étapes suivantes sont exécutées :

   - router le trafic de données temps réel cycliquement récurrent pour déterminer des chemins de données les plus économiques pour les messages temps réel dans le réseau de communication, pour autant que de tels chemins de données économiques existent,
   - ordonnancer le trafic de données temps réel cycliquement récurrent sur la base des chemins de données déterminés pour définir des moments d'émission des messages temps réel à l'intérieur des cycles,
   - diviser un macrocyle en k phases, k étant un entier naturel > 1,
   - affecter un message temps réel respectif à une phase, et dans lequel l'ordonnancement du trafic de données temps réel cycliquement récurrent et l'affectation d'un message temps réel respectif à une phase ont lieu simultanément.

2. Procédé selon la revendication 1, dans lequel une phase est subdivisée en 1 sous-phases, 1 étant un entier naturel > 1.

3. Support mémoire pour dispositifs de traitement de données avec des instructions qui y sont mémorisées et qui font procéder le dispositif de traitement de données à exécuter toutes les étapes du procédé selon l'une des revendications 1 à 3.

4. Réseau de communication d'évitement de collision pour la communication d'un trafic de données temps réel, comprenant une unité qui, chronologiquement avant un trafic de données temps réel composé de messages temps réel, ordonne les étapes suivantes :

- router le trafic de données temps réel cycliquement récurrent pour déterminer des chemins de données les plus économiques pour les messages temps réel dans le réseau de communication, pour autant que de tels chemins de données économiques existent,
- ordonnancer le trafic de données temps réel cycliquement récurrent sur la base des chemins de données déterminés pour définir des moments d'émission des messages temps réel à l'intérieur des cycles,
- diviser un macrocyle en k phases, k étant un entier naturel > 1,
- affecter un message temps réel respectif à une phase, et qui est conçue de telle sorte que l'ordonnancement du trafic de données temps réel cycliquement récurrent et l'affectation d'un message temps réel respectif à une phase ont lieu simultanément.

# FIG 1

## FIG 2

Eingabedaten → [XML Reader] → Problem Datenstruktur

[Router]

[Scheduler]

[GUI]

[XML Writer] → Ausgabedaten

Lösung Datenstruktur

## FIG 3

## FIG 4

FIG 5

FIG 6

FIG 7

FIG 8

# FIG 9

Kapazität = 1

Kosten niedrig

Kapazität unbegrenzt

Kosten hoch

# FIG 10

N2

A1

N1

N4

A2

N3

# FIG 11

# FIG 12

## FIG 13

N1, 1 - N3, 0

N1, 0 - A1, 0

N2, 2 - N4, 1

N3, 2 - A2, 0

N3, 1 - N2, 1

A1, 1 - N2, 0

A2, 1 - N4, 0

## FIG 14

N1, 1 - N3, 0

N1, 0 - A1, 0

N2, 2 - N4, 1

N3, 2 - A2, 0

N3, 1 - N2, 1

A1, 1 - N2, 0

A2, 1 - N4, 0

## FIG 15

FIG 16

# FIG 17

FIG 18

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03039082 A1

- WO 03039082 A

**In der Beschreibung aufgeführte Nicht-Patentliteratur**

- **R. K. Ahuja ; T. L. Magnanti ; J. B. Orlin.** Network Flows. Prentice Hall, 1993